(19) **Europäisches Patentamt**

**European Patent Office**

**Office européen des brevets**

(11) **EP 1 442 236 B1**

(12) **EUROPEAN PATENT SPECIFICATION**

(45) Date of publication and mention
of the grant of the patent:
**06.04.2005 Bulletin 2005/14**

(51) Int Cl.⁷: **F16H 33/18**

(86) International application number:
**PCT/BG2002/000025**

(21) Application number: **02759944.8**

(22) Date of filing: **23.09.2002**

(87) International publication number:
**WO 2003/029691 (10.04.2003 Gazette 2003/15)**

(54) **A SATELLITE INERTIA MODULE AND A STEPLESS AUTOMATIC TRANSMISSION PROVIDED THEREWITH**

TRÄGHEITSPLANETENRADMODUL UND EIN DAMIT VERSEHENES STUFENLOSES GETRIEBE

MODULE D'INERTIE SATELLITE ET TRANSMISSION AUTOMATIQUE A VARIATION CONTINUE EQUIPE DE TELS MODULES

(84) Designated Contracting States:
**AT BE BG CH CY CZ DE DK EE ES FI FR GB GR IE IT LI LU MC NL PT SE SK TR**

(30) Priority: **04.10.2001 BG 10597601**

(43) Date of publication of application:
**04.08.2004 Bulletin 2004/32**

(73) Proprietors:
• **Stoyanov, Dobromir Radev**
  **9700 Shoumen (BG)**
• **Bangiev, Branimir Angelov**
  **9700 Shoumen (BG)**

(72) Inventors:
• **Stoyanov, Dobromir Radev**
  **9700 Shoumen (BG)**
• **Bangiev, Branimir Angelov**
  **9700 Shoumen (BG)**

(74) Representative: **Pakidanska, Ivanka Slavcheva**
  **6, Trapezica street, fl.1**
  **1000 Sofia (BG)**

(56) References cited:
**BG-B- 61 286          FR-A- 1 588 205**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### FIELD OF THE INVENTION

The invention refers to a satellite inertia module with a stepless automatic transmission applicable to transport vehicles.

### BACKGROUND OF THE INVENTION

A satellite inertia module showing the features of the preamble of claims 1 and 4, and consisting of a disc with even number of weights attached to it radially and loosely designed as sectors with equal mass and configuration is known from BG 61 286. The sectors have arch-shaped profile and half of the arc adjacent to the central angle is designed with longer radius compared to the other half radius and the mass centre of the sector lies on the bisector of the angle that forms the arcs. An automatic impulse transmission (BG 61286) is known which consists of an input shaft mounted to a corpus with a central ring gear assembled to it and kinematically connected to satellite shafts with loose geometrical axes by means of parasitic satellite gears, engaged simultaneously both to the central ring gear and to other ring gears assembled to the satellite shafts. The above described satellite inertia modules are attached statically to the shafts and the modules are in mechanical contact with a carrier mounted to a corpus and connected mechanically to an output shaft. The part of the sector designed with longer radius of the arc is in mechanical contact with a block bearing mounted to the same axis as the carrier and the discs are dephased at the half of the sector central angle.

A disadvantage of the described module and transmission is the big dynamic pressure of the mechanisms connected to the output shaft caused by the nonuniform angular speed of the output shaft, which is a consequence of the pulsatory alteration of the moment of rotation of the carrier from zero point to another value. Another disadvantage is the small moment of rotation, that affects the carrier respectively the output shaft under default size parameters. All these imperfections lessen the reliability and effectiveness of the transmission and impede its practical application.

### SUMMARY OF THE INVENTION

It is an object of the invention to design a satellite inertia module and a stepless automatic transmission with it, that ensure uniform angular speed of the output shaft and possibility for achieving bigger moment of rotation of the output shaft compared to previously known transmissions while the angular speed of the input shaft and the dimension parameters remain the same. The task has been achieved by the presented below design of a satellite inertia module for a stepless automatic transmission. The satellite inertia module consists of a holder with even number of weights attached radially and loosely to it designed as sectors equal both in mass and configuration and having arch-shaped profile. Both parts of the arc adjacent to the sector have different length of radius thus the part of the sector arc, which is directed toward the course of its motion corresponds to the adjacent angle $\alpha$ equal or smaller than the half of the sector central angle and designed with shorter radius. The mass centre C of the sector is located in that part of the sector designed with shorter radius of the arc.

It is possible for the mass centre C of sector 2 to be located on the radius drawn through the point of its profile in which both arcs with different radii join together.

It is also possible supplementary inertia masses to be attached statically to each of the sectors located symmetrically on both sides of the sectors and projecting radially and axially out of them thus achieving longer radius of inertia Rd of the supplementary inertia masses in comparison to the radius of inertia Rc of the sector. The mass centre of the supplementary masses coincides in direction with the mass centre of the bearing sector.

The aim of the invention is achieved also by designing a stepless automatic transmission which consists of an input shaft mounted to a corpus and assembled with a central ring gear connected kinematically to shafts with loose geometrical axes by means of satellite ring gears mounted to the shafts. The shafts with loose geometrical axes are at least two and the satellite inertia modules described above are mounted statically to them in two or more parallel lines. The satellite inertia modules are in mechanical contact with a carrier mounted to the corpus and connected mechanically to the output shaft. The satellite modules are dephased one toward the other at an angle of $0<\beta<360$ and part of their external contour is in mechanical contact with a block bearing mounted to the same axis as the carrier.

It is possible to calculate the angle of dephasing $\beta$ using the formula:

$$\beta = \frac{360}{m.n.p}, \qquad (1)$$

wherein:

    m - is the number of sectors in one module;

    n - is the number of satellite shafts in a single line;

    p - is the number of lines.

It is an advantage of the invention to obtain increased uniformity of the angle speed of the output shaft which is a result of the enlarged contact surface between the satellite inertia module and the block bearing, this leading to longer time interval during which the carrier generates the moment of rotation.

The dephasing of the satellite inertia modules one toward the other at a strictly definite angle β according to formula (1) results in a supplementary growth of the uniformity of the angular speed of the output shaft due to the successive contacts between consecutive sectors of the transmission and the block bearing during even time intervals thus resulting in steadier summary values of the moment of rotation generated to the carrier respectively the output shaft. Another advantage of the invention is the increase of moment of rotation M transmitted to the carrier and respectively the output shaft by means of minimizing the internal friction losses in the transmission as a whole which is due to simplification of the kinematic connection between the input shaft and the shafts with loose geometrical axes using a ring gear with internal teeth engaged directly to other ring gears mounted to the shafts with loose geometrical axes.

The designed increase of the inertia radius of the sectors and the mounting of supplementary lines of satellite modules are leading also to increased moment of rotation transmitted by the output shaft.

The advantages of the invention listed above allow at equal other conditions achieving smaller dimensions of the stepless automatic transmission compared to similar transmissions and guarantee its reliability, effectiveness and practical applicability to any transport vehicle.

DESCRIPTION OF THE ENCLOSED DRAWINGS

To visualize the invention and its principles of action two model designs of the satellite inertia module and the stepless automatic transmission are shown in the enclosed figures.

Figure 1 is a longitudinal sectional view of a satellite inertia module along the direction of the axis;

Figure 2 is a cross sectional view of the satellite inertia module;

Figure 3 is a longitudinal sectional view of a variation of the satellite inertia module along the direction of the axis;

Figure 4 is a cross sectional view of a variation of satellite inertia module;

Figure 5 is a longitudinal sectional view along the axis of a stepless automatic transmission;

Figure 6 is a cross sectional view of a stepless automatic transmission;

Figure 7 is a kinematic scheme of a stepless automatic transmission designed with two parallel lines;

Figure 8 is a scheme of the forces generated in working mode of the satellite inertia module in the stepless automatic transmission.

DESCRIPTIONS OF THE PREFERRED EMBODIMENTS

For more detailed visualization of the invention the following two embodiments of the satellite inertia module and two embodiments of the stepless automatic transmission are presented.

In the drawings 1 and 2 the satellite inertia module for a stepless automatic transmission is consisting of: a holder 1 having even number of weights attached radially and loosely to it, designed as arch-profiled sectors 2 equal both in mass and configuration. Both parts 3 and 4 of the adjacent arc of the sector 2 have different radii and the part of the arc 4 of the sector 2 which is directed towards the course of its motion corresponds to the adjacent angle α, that is smaller than the half of the central angle of the sector 2 and is designed with shorter radius. The mass centre C of the sector 2 is located on the radius drawn through the point of its profile in which both arcs with different radii join together.

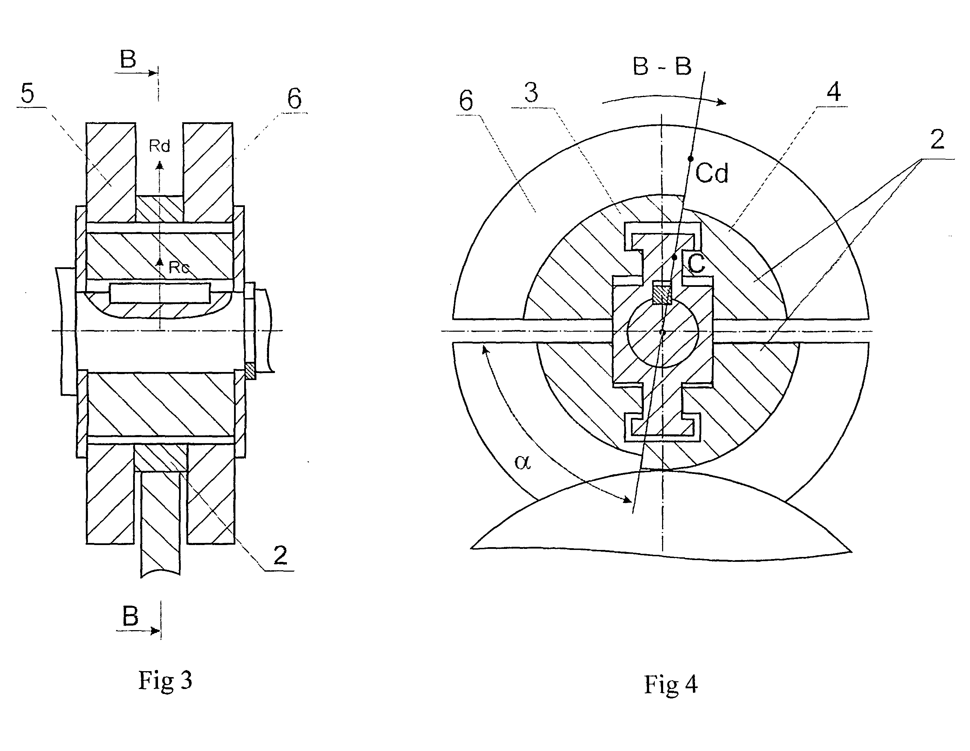

Another basic type of a satellite inertia module is shown in figures 3, 4. Supplementary inertia masses 5, 6 attached statically to both of the sectors 2 are located symmetrically on both sides of the sectors projecting radially and axially out of them thus achieving longer Rd inertia radius of the supplementary inertia masses than the Rs inertia radius of the sector. The mass centre Cd of the supplementary masses is located on the radius drawn through the mass centre C of the bearing sector.

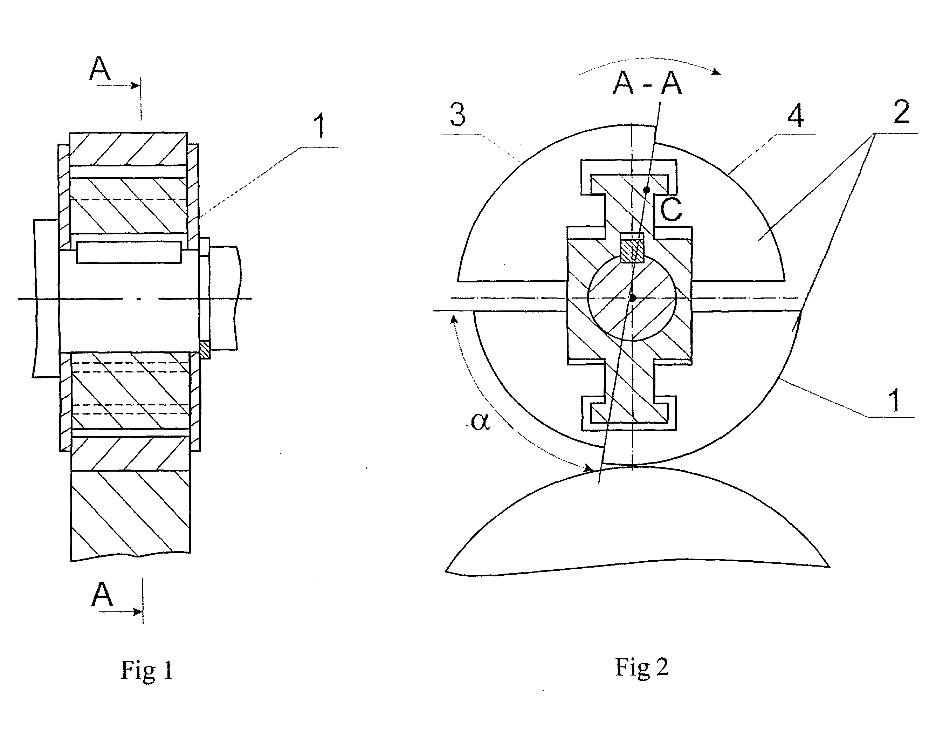

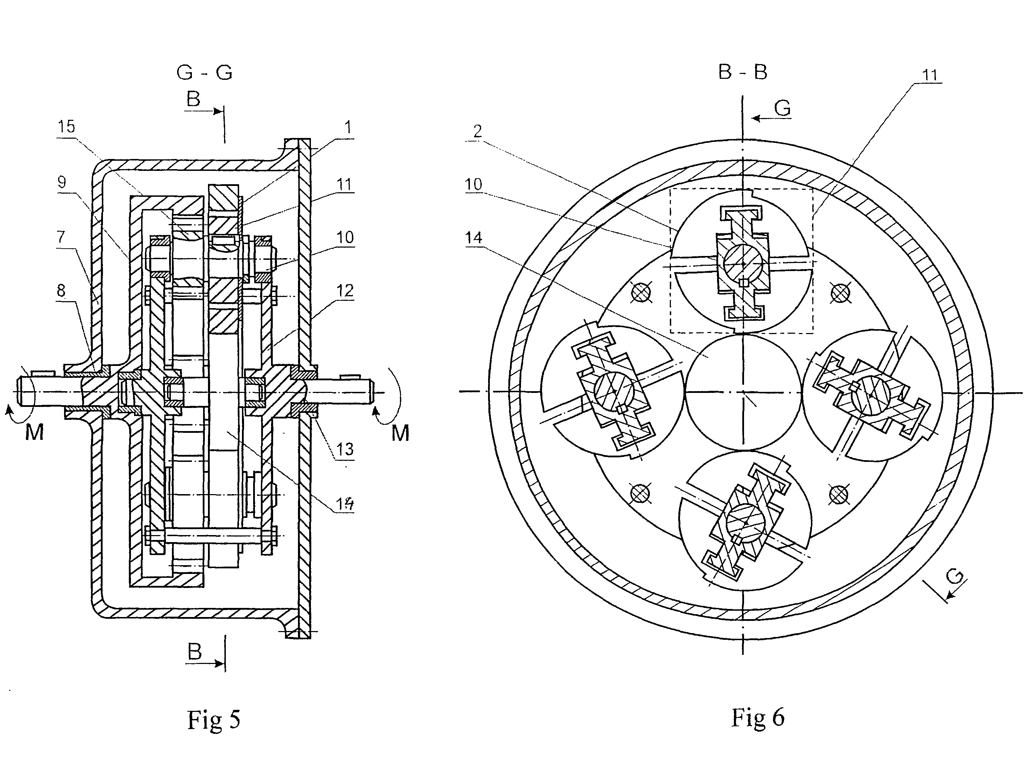

The stepless automatic transmission shown in figures 5 and 6 consist of: an input shaft 8 mounted to a corpus 7 assembled with a central ring gear 9 connected kinematically to shafts 10 with loose geometrical axes. Satellite inertia modules 11 are connected statically to the shafts 10 in a single line and have mechanical contact with a carrier 12 which is mounted to the corpus 7 and is mechanically connected to an output shaft 13. A part of the external contour of the satellite inertia module 11 is in mechanical contact with a block bearing 14 mounted to the same axis as the carrier 12. The input shaft 8 and the shafts 10 are connected by means of satellite gears 15, which engage with the internal teeth of the central ring gear 9. The satellite modules 11 follow the design according to figures 1 and 2 and are dephased one towards the other at an angle, calculated using formula (1).

$$\beta = \frac{360°}{2.4} = 45°$$

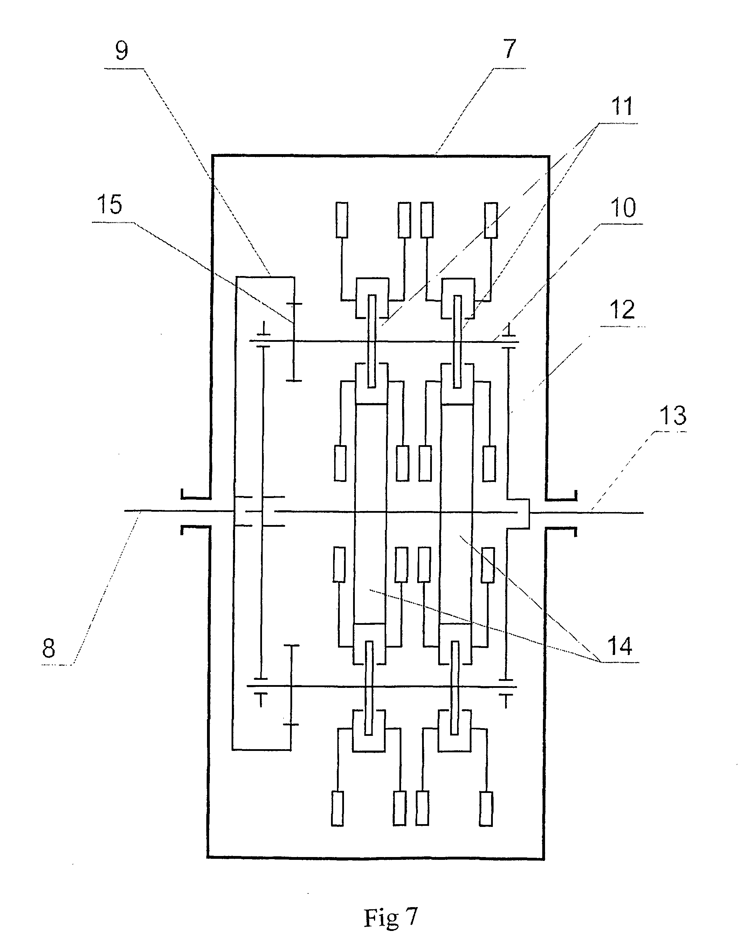

Figure 7 shows a stepless automatic transmission designed with two parallel lines of satellite modules 11 mounted to shafts 10. The satellite modules 11 are in mechanical contact with the carrier 12 and the block bearings 14, which are mounted to the same axis as the carrier. There are two shafts 10 and each satellite module 11 consists of two sectors 2. The satellite modules 11 are dephased one toward the other at an angle β, calculated using formula (1):

$$\beta = \frac{360°}{2.2.2} = 45°,$$

## DETAILED DESCRIPTION

The satellite inertia module is designed for stepless automatic transmissions. The stepless automatic transmission is applicable to any means of transport and serves to transmit smoothly the rotary motion of the output shaft of the engine to the input shaft of all mechanisms in working mode.

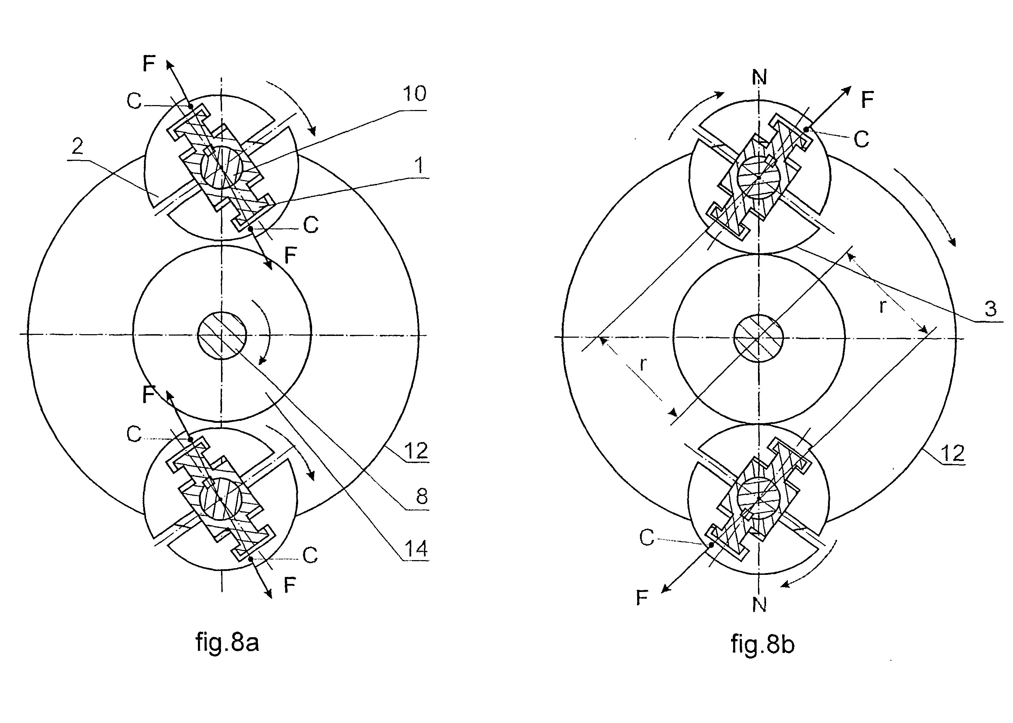

As the input shaft 8 rotates in the direction shown in figure 8a so does the central ring gear 9 in conjunction with the satellite gear 15 internally engaged to it (figures 5, 6). Subsequently the shafts 10 together with the satellite inertia modules 11 statically attached to them acquire rotating motion on their axis in the direction of the rotation of the input shaft 8. The rotation generates centrifugal forces F their tracks being on the line which connects the centre of the shaft's 10 axis to the mass centre C of the sector 2. Under the impact of the centrifugal forces F the sectors 2 are dislocated radially until they are limited by the holder 1 (figure 8a).

Along with the rotation of the satellite inertia module 11 with the shaft 10 on their axis the tracks of the centrifugal forces rotate too crossing at regular intervals the normal NN (fig. 8b) drawn between the geometrical centres of the shaft 10 and the block bearing 14 respectively to the carrier 12.

Due to the even number of the sectors 2 the generated centrifugal forces F applied to their mass centres C are reciprocally balanced. There is no impact on the axes of the shaft 10 by an unbalanced force respectively there is no moment of rotation applied to the carrier 12.

The equilibrium of the centrifugal forces F remains unchanged till the moment when the adjacent arc 3 of the sector 2 designed with longer radius comes in mechanical contact with the block bearing 14. During the contact (figure 8b) the centrifugal force F applied to the sector's 2 opposite sector remains unbalanced thus exerting pressure to the carrier 12 through the holder I and the shaft 10.

As far as the track of the centrifugal force F rotates along with the sector 2 and the holder 1 it starts to divert from the normal NN between the geometrical centres of the shaft 10 and the block bearing 14 thus generating a moment of rotation M toward the geometrical centre, respectively the axis of the carrier 12.

The sectors 2 are in contact with the block bearing 14 only with that part of their arc 3 designed with longer radius and the sector's 2 mass centre C is located in the part with shorter radius of the arc 4 thus the centrifugal force F applied to the opposite sector 2 is unbalanced exerting pressure on the carrier 12 only when its track diverts in the same direction from the normal NN resulting in a moment of rotation M of the carrier which has constant sign.

When the normal NN is being crossed by the track of the centrifugal forces in the direction opposite to the above mentioned the sector's 2 part of the arc 4 which has shorter radius is not in contact with the block bearing 14 and the created centrifugal forces F balance reciprocally due to the even number and the same mass and configuration of the sectors.

As far as the part of the sector 2, which has longer radius of the arc 3, is bigger the most of the time necessary for a complete revolution of the shaft 10 is used to generate a moment of rotation M.

The dephasing of each satellite inertia module 11 toward the preceding one at an angle 0<B<360 makes possible the consecutive switching in of the different sectors (2) of the transmission which allows to minimize the sharp variations in the summary values of the moment of rotation M genetated to the carrier 12 for a complete revolution of the shaft 10 which results in constant angular speed of the output shaft.

The dephasing of the modules 11 at a strictly definite angle β, calculated using, the formula (1) ensures the successive contacts between the arc 3 of the sector 2 of each consecutive module 11 and the block bearing 14. This results in a supplementary levelling of the summary values of the moment of rotation M generated to the carrier 12 for a complete revolution of the shaft 10 and respectively increase the uniformity of the angle speed of the output shaft 13.

When the mass of the sectors 2 is enough and their frequency of rotation correspond to it, the generated moment of rotation M is big enough to neutralize the resistance moment M and to transmit the rotating motion to the carrier 12 which is connected to the output shaft 13.

The rotating motions of the carrier 12 and those of the central ring gear 9 coincide in direction and reducing the resistance moment of the output shaft 13 equals the frequencies of their rotation. As a consequence the relatively rotating motion of the sectors 2 attached to the holders 1 stops and the carrier 12 in conjunction with the output shaft 13 connected to it starts operating as a single unit together with the input shaft 8 i.e. the transmission begins to operate as a clutch and the transmission ratio between the input shaft 8 and the output shaft 13 equal to 1.

## Claims

**1.** A satellite inertia module for a stepless automatic transmission consisting of a holder (1) with even number of weights attached radially and loosely to it forming arch-profiled sectors (2) equal both in mass and configuration and the two parts of the sector's (2) adjacent arc (3) and (4) having different length of radii **characterized in that** the sector's (2) part of the arc (4) which is directed toward its motion corresponds to adjacent angle α, smaller than the half of the central angle or equal to it and designed with smaller radius and the sector's (2) mass centre ( C ) is located in the part having smaller radius of the arc.

2. A satellite inertia module for a stepless automatic transmission according to claim 1 wherein the mass centre ( C ) of the sector (2) is located on the radius drawn through the point of its profile in which both arcs with different radii join.

3. A satellite inertia module for a stepless automatic transmission according to claim 1, wherein the supplementary inertia masses (5) and (6) are attached statically to both of the sectors (2) and are located on their both sides symmetrically and are projecting radially and axially out of them so that the inertia radius (Rd) of the supplementary inertia masses is longer than the inertia radius (Rc) of the sector and the mass centre (Cd) of the supplementary masses coincides in direction with the bearing sector's mass centre ( C ).

4. A stepless automatic transmission consisting of a corpus (7) with a mounted input shaft (8) and a central ring gear (9) assembled to it connected kinematically to shafts (10) with loose geometrical axes and satellite inertia modules (11) according to claim 1 mounted statically to them having mechanical contact with a carrier (12) mounted to the corpus (7), which is mechanically connected to an output shaft (13) so that the satellite inertia modules (11) are dephased one toward the other and part of their external contour is in mechanical contact with a block bearing (14) mounted to the same axis as the carrier (12), **characterized in that** the central ring gear (9) has internal teeth and the connection between the input shaft (8) and the shafts (10) is by means of the satellite gears (15) mounted to the shafts (10) and the gears (15) are internally engaged to the central ring gear (9) and the number of the shafts (10) must be at least two with the satellite inertia modules (11) mounted on them in a single line or in multiple lines following the design according to claim 1 and dephased one toward the other at an angle 0<B<360.

5. A stepless automatic transmission according to claim 4, wherein the angle β of the dephasing of the satellite module one toward the other is calculated using the formula:

$$\beta = \frac{360}{m.n.p},$$

wherein,
m - is the number of sectors in a module
n - is the number of satellite shafts in a single line
p - is the number of lines

**Patentansprüche**

1. Das Planetenträgheitsmodul für automatische Durchzugübertragung besteht aus Halter (1) mit an ihm beweglich radialbefestigten Belastungen, deren Anzahl eine gerade Zahl ist, ausgefertigt als Sektoren (2) mit gleicher Masse und Konfiguration, und bogenförmigem Profil, wobei die beiden Teile (3) und (4) des dem Sektor (2) beiliegenden Bogens verschiedene Radien haben, **dadurch gekennzeichnet, dass** der Teil (4) des Sektors (2) der sich in Bewegungsrichtung befindet, einem anliegenden Winkel αentspricht, der gleich groß oder kleiner als die Hälfte des Zentralwinkels des Sektors ist, und mit kleinerem Radius ausgeführt ist, während der Massenmittelpunkt (C) des Sektors (2) auf dem Teil mit kleinerem Bogenradius liegt.

2. Das Planetenträgheitsmodul für automatische Durchzugübertragung, nach Anspruch 1, **dadurch gekennzeichnet, dass** der Massenmittelpunkt (C) des Sektors (2) auf dem Radius liegt, der den Punkt seines Profils überquert, wo die Bögen mit verschiedenen Radien zusammenkommen.

3. Das Planetenträgheitsmodul für automatische Durchzugübertragung, nach Anspruch 1, **dadurch gekennzeichnet, dass** zu jedem der Sektoren (2) beiderseits symetrisch angeordnete, Belastungen (5) und (6) unbeweglich befestigt und radial und axial ausgetragen sind, so dass das Trägheitsradius (Ra) der zusätzlichen Trägheitbelastung größer als der Sektorträgheitsradius (Rc) ist, während der Massenmittelpunkt in Koinzidenz mit der Richtung der Massenmittelpunkt (C) des tragenden Sektors ist.

4. Die automatische Durchzugübertragung besteht aus Gehäuse (7), in dem Eingangswelle (8) mit zentrischem Zahnrad (9) gelagert ist, wobei das Zahnrad (9) kinematisch mit Wellen (10) mit beweglichen geometrischen Achsen verbunden ist, wobei an diesen Wellen unbewegliche Planetenträgheitsmodule (11) unbeweglich montiert sind, die mit Führungsteil (12), der im Korpus (7) gelagert ist und mechanische Verbindung zur Ausgangswelle (13) hat, in mechanischem Kontakt sind, wobei die Planetenträgheitsmodule (11) untereinander dephasiert sind und ein Teil ihrer Außenkontur mechanischen Kontakt mit Stützlager (14) hat, der dem Führungsteil (12) koaxial montiert ist, **dadurch gekennzeichnet, dass** das zentrische Zahnrad (9) mit Innenverzahnung ist und die Verbindung zwischen Eingangswelle (8) und Wellen (10) durch darauf montierte Planetenzahnräder (15) geschieht, die mit der Innenverzahnung des Zahnrads (9) in Eingriff gebracht sind, wobei die Anzahl der Wellen (10) wenigstens zwei ist, darauf sind in einer oder zwei Reihen Planetenmodule (11) montiert, die laut Anspruch 1 ausgeführt und untereinander um einen Winkel 0 < β< 3600 dephasiert sind.

5. Die automatische Durchzugübertragung, laut Anspruch 4, **dadurch gekennzeichnet, dass** β- der Winkel der Dephasierung der Sattelitenmodule untereinander - laut folgender Formel ermittelt wird:

$$\beta = \frac{360°}{m.n.p}$$

Dabei:

**m** ist Sektorenanzahl in einem Modul;

**n** ist Sattelitenwellenanzahl in einer Reihe;

**p** ist Reihenanzahl;

**Revendications**

1. Module d'inertie satellite, destiné à transmission automatique continue, comprenant porte-pièce (1) au nombre pair de poids attachés à celui-ci radialement et d'une manière mobile, réalisés sous la forme de segments (2) à la même masse et configuration et au profile arqué, les deux parties (3) et (4) de l'arc adjacent au segment (2) ayant des rayons différents, de sorte que la partie de l'arc (4) du segment (2), qui est disposée dans le sens de son mouvement, correspond à un angle adjacent α, égal ou plus petit que la moitié de l'angle central du segment et elle est réalisée de rayon plus petit, et le centre des masses (C) du segment (2) repose dans la partie réalisée de rayon plus petit de l'arc.

2. Module d'inertie satellite destiné à transmission automatique continue, selon revendication 1, **caractérisé par** ce que le centre des masses (C) du segment (2) repose sur le rayon traversant le point de son profile où se rejoignent les arcs aux rayons différents.

3. Module d'inertie satellite destiné à transmission automatique continue, selon revendication 1, **ca-**

**ractérisé par** ce que vers chacun des segments (2) ont été attachées fixement des masses d'inertie supplé-mentaires (5) et (6), disposées symétriquement des deux côtés des segments (2) et extraposées radialement et axialement hors de ceux-ci, de sorte que le rayon d'inertie (Rd) des masses d'inertie supplémentaires est plus grand que le rayon d'inertie (Rc) du segment, et le centre des masses (Cd) des masses supplémentaires coïncide par sa direction avec le centre des masses (C) du segment porteur.

4. Transmission automatique continue, comprenant corps (7) auquel est attaché à l'aide de roulement l'arbre d'entrée (8) à roue dentée centrale (9), cinématiquement liée aux arbres (10) possédant des axes géométriques mobiles, auxquels sont montés fixement des modules d'inertie satellites (11) qui ont un contact mécanique avec le porte-train (12), relié à l'aide de roulement au corps (7) et mécaniqument joint à l'arbre de sortie (13) et les modules satellites (11) étant déphasés l'un par rapport à l'autre et une partie de leur contour externe étant en contact mécanique avec un roulement d'appui (14) monté au même axe que le porte-train (12), **caractérisée par** ce que la roue dentée centrale (9) possède des dents internes et la connection entre l'arbre d'entrée (8) et les arbres (10) est réalisée à l'aide de roues dentées satellites (15) montées sur les derniers qui sont engrenées aux dents internes de la roue dentée centrale (9), les arbres (10) étant au moins au nombre de deux et sur ceux-ci sont montés en un ou plusieurs rangs les modules satellites (11), réalisés selon revendication 1 et déphasés l'un par rapport à l'autre à l'angle 0 < β< 360°.

5. Transmission automatique continue, selon revendication 4, **caractérisée par** ce que l'angle β de déphasage des modules satellites l'un par rapport à l'autre est déterminé à l'aide de la formule suivante:

$$\beta = \frac{360°}{m.n.p}$$

où:

**m** c'est le nombre de segments dans un module

**n** c'est le nombre d'arbres de satellite dans un rang

**p** c'est le nombre des rangs.

Fig 2

Fig 1

Fig 3

Fig 4

EP 1 442 236 B1

G - G

B

15

9

7

8

1

11

10

12

13

14

M                                      M

B

Fig 5

B - B

G

2

10

14

11

G

Fig 6

EP 1 442 236 B1

Fig 7

fig.8b

fig.8a